# EUROPÄISCHE PATENTSCHRIFT

(11) **EP 1 970 784 B1**
(45) Veröffentlichungstag und Bekanntmachung des Hinweises auf die Patenterteilung: **23.12.2015**
(21) Anmeldenummer: 08003891.2
(22) Anmeldetag: 03.03.2008
(51) Int. Cl.: G05B 19/06

(54) **Elektronische Nockenschalteinrichtung**
Electronic cam switching device
Dispositif de commutation à cames électronique

(30) Priorität: 16.03.2007 DE 102007012773
(43) Veröffentlichungstag der Anmeldung: 17.09.2008
(73) Patentinhaber: ABB AG, 68309 Mannheim (DE)
(72) Erfinder: Kratz, Annette, Dipl.-Ing., 69259 Wilhelmsfeld (DE); Stein, Josef, 45359 Essen (DE)
(74) Vertreter: Miller, Toivo

(56) Entgegenhaltungen:
- WO-A-03/016228
- DE-A1- 10 113 261
- DE-A1- 10 342 561
- BERND AICHELE: "Schnell und logisch schalten" WWW.IEE-ONLINE.DE, [Online] November 2006 (2006-11), Seiten 62-64, XP002528585 Gefunden im Internet: URL:http://imperia.mi-verlag.de/imperia/md /content/ai/ae/fachartikel/ie/2006/11/ie06 _11_062.pdf> [gefunden am 2009-05-18]
- "Application Electronic Cam" STÖBER ANTRIEBSTECHNIK, [Online] September 2006 (2006-09), Seiten 1-165, XP002528586 Gefunden im Internet: URL:http://www.stoeber.de/TDE/G5/DOKUV52/i ndex.php?displaylang=de> [gefunden am 2009-05-18]

## Beschreibung

Die Erfindung bezieht sich auf eine elektronische Nockenschalteinrichtung, die auch als elektronische Nockensteuereinrichtung bezeichnet wird. Solche Einrichtungen finden im Bereich der Maschinensteuerung Anwendung, wie beispielsweise zur Steuerung von Produktions- oder Werkzeugmaschinen oder von Robotern.

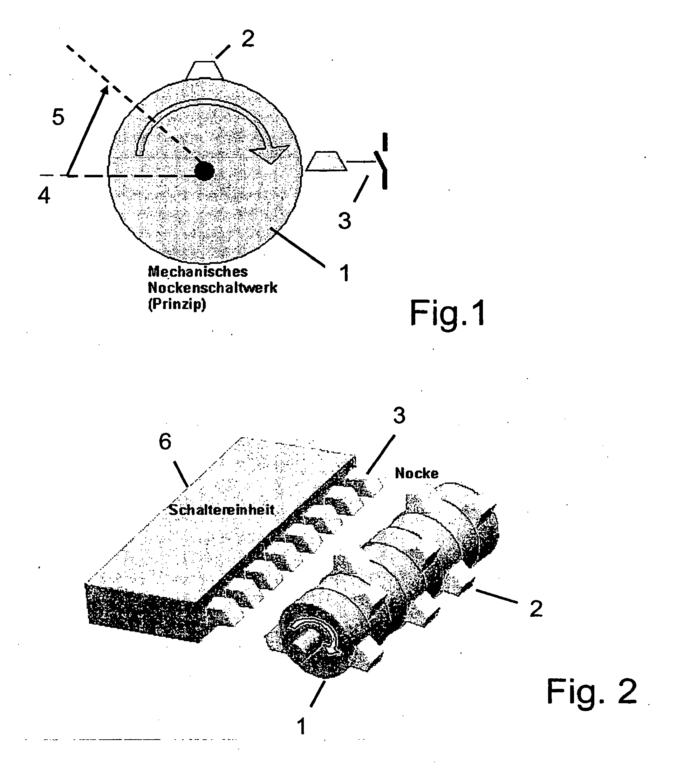

Elektronische Nockenschalteinrichtungen besitzen keine mechanische Nocke, der Begriff Nocke wurde lediglich von den schon länger bekannten mechanischen Nockenschaltwerken übernommen. Ein mechanisches Nockenschaltwerk in seiner ursprünglichen Form ist als Prinzipdarstellung in Fig. 1 gezeigt. Das Nockenschaltwerk enthält eine rotierende Welle 1 - oder einen Zylinder - mit wenigstens einer auf dem Außenradius angebrachten Erhöhung, der Nocke 2. Die Nocke 2 wirkt bei jeder Umdrehung der Welle 1 auf einen Schalter 3 ein, betätigt also den Schalter 3. Anstelle von Nocken könnten auch Vertiefungen in der Welle vorhanden sein, die mittels des Schalters abgetastet werden.

Am Umfang der Welle 1 angebrachte Nocken 2 lösen bei jeder Umdrehung der Welle 1 einen Schaltvorgang aus. Der Zeitpunkt des Schaltvorgangs wird durch die Lage der jeweiligen Nocke 2 gegenüber einem definierten Bezugspunkt 4 bestimmt, also durch einen bestimmten Drehwinkel 5. Durch Anordnung mehrerer Nocken 2 können auf eine 360°-Umdrehung der Welle 1 bezogene mehrere Schaltzeitpunkte festgelegt sein. Unabhängig von der Rotationsgeschwindigkeit findet immer zum exakt gleichen Winkelgrad ein Schaltvorgang statt.

In Fig. 2 ist dargestellt, wie sich durch Anordnung mehrerer separater Nocken 2 entlang der Längsachse einer Welle 1, sowie mittels einer Schalteinheit 6 mit mehreren Schaltern 3 ein mehrspuriges Nockenschaltwerk herstellen lässt. Eine Nockenspur kann jeweils mehrere auf eine 360°-Umdrehung der Welle bezogene Schaltzeitpunkte aufweisen.

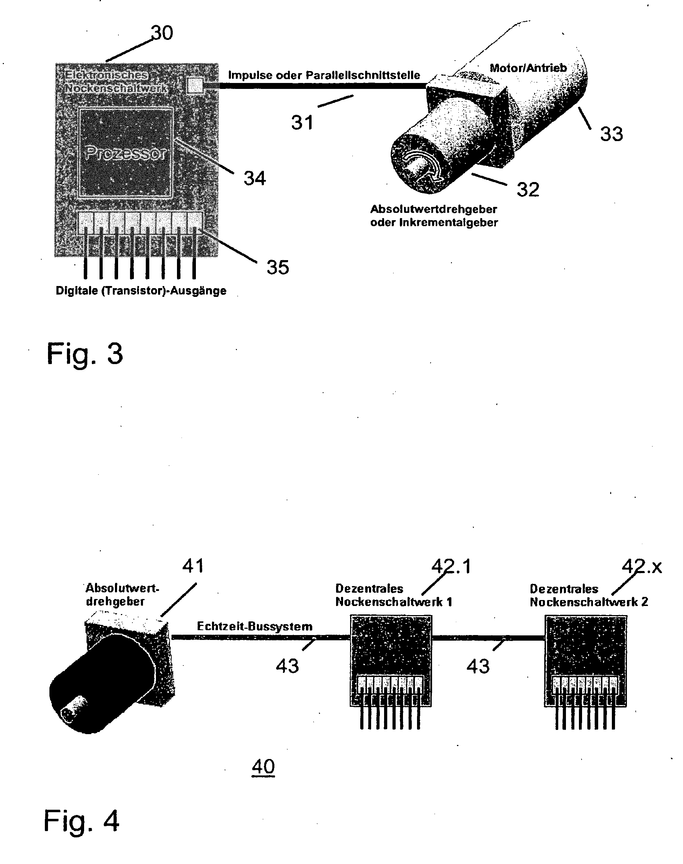

Fig. 3 zeigt eine typische Anordnung einer elektronischen Nockenschalteinrichtung. Einem elektronischen Nockenschaltwerk 30 sind dabei mittels eines Verbindungskabels 31 elektrische Signale eines Drehwertgebers 32, z. B. eines Absolutwertdrehgebers oder Inkrementalwertgebers zugeführt. Der Drehwertgeber 32 ist mit einem Motor oder Antrieb 33 gekoppelt. Positionswerte des Drehwertgebers 32 werden am elektronischen Nockenschaltwerk 30 an einer schnellen Parallelschnittstelle eingelesen oder im elektronischen Nockenschaltwerk 30 durch Auswertung empfangener Impulse errechnet. Zur Definition des jeweiligen drehwinkelbezogenen Schaltzeitpunktes ist ein Referenzsignal erforderlich, das z.B. vom Drehwertgeber 32 oder einem zusätzlichen Positionsgeber geliefert wird, wie beispielsweise in DE 102004 062160A1 beschrieben ist. Zur Signalauswertung enthält das elektronische Nockenschaltwerk 30 elektronische Einrichtungen mit einem Prozessor 34, womit auch ein drehwinkelabhängiges Schalten von Transistorausgängen 35 durchgeführt wird.

Die Genauigkeit der mit einer solchen Anordnung erreichbaren drehwinkelabhängigen Schaltzeitpunkte ist durch die direkte Anbindung und Verarbeitung sehr hoch. Allerdings ist dabei auch eine räumliche Nähe des elektronischen Nockenschaltwerks zum Drehwertgeber erforderlich.

In der Druckschrift Bernd Aichele: "Schnell und logisch schalten" www.IEE-ONLINE. DE ist ein elektronisches Nockenschaltwerk mit speziellen EtherCat I/O-Modulen beschrieben. Weitere elektronische Nockenschaltwerke sind in der DE 10342561, DE 10113261 und in "Application Electronic Cam" Stöber Antriebstechnik beschrieben.

Davon ausgehend liegt der Erfindung die Aufgabe zugrunde, eine elektronische Nockenschalteinrichtung anzugeben, mit der eine größere räumliche Trennung des elektronischen Nockenschaltwerks vom Drehwertgeber möglich ist.

Diese Aufgabe wird durch eine elektronische Nockenschalteinrichtung mit den im Anspruch 1 angegebenen Merkmalen gelöst. Vorteilhafte Ausgestaltungen sind in weiteren Ansprüchen angegeben.

Mit der Erfindung wird also vorgeschlagen, einen Drehgeber mittels eines Echtzeit-Bussystems mit einem Nockenschaltwerk - sowie auch Nockenschaltwerke untereinander - zu verbinden, wodurch bei Verwendung eines geeigneten Echtzeit-Ethernet-Bussystems Entfernungen bis etwa 100 m zwischen diesen Geräten möglich sind.

Mit einer solchen technischen Lösung sind eine Reihe von Vorteilen verbunden. Durch Verwendung eines Bussystems wird der Verkabelungsaufwand vereinfacht, und der Anschluss mehrerer in einer technischen Anlage verteilter Nockenschaltwerke ermöglicht. Die Nockenschaltwerke können in Einausgabegeräten integriert sein. In Verbindung mit einer am Bussystem angeschlossenen speicherprogrammierten Steuerung kann eine zentrale Projektierung der dezentral angeordneten Nockenschaltwerke vorgenommen werden.

Die weitere Beschreibung der Erfindung und deren Vorteile sowie deren Ausgestaltungen erfolgt nachstehend anhand von Ausführungsbeispielen, die in Zeichnungsfiguren dargestellt sind.

Es zeigen:
- Fig. 1: eine Prinzipdarstellung eines mechanischen Nockenschaltwerks nach dem Stand der Technik,
- Fig. 2: ein mehrspuriges mechanisches Nockenschaltwerk nach dem Stand der Technik,
- Fig. 3: eine Prinzipdarstellung einer elektronischen Nockenschalteinrichtung nach dem Stand der Technik,
- Fig. 4: ein Ausführungsbeispiel einer erfindungsgemäßen dezentralisierten elektronischen Nockenschalteinrichtung in einer Prinzipdarstellung, und
- Fig. 5: ein weiteres Ausführungsbeispiel einer erfindungsgemäßen dezentralisierten elektronischen Nockenschalteinrichtung.

Die Darstellungen zum Stand der Technik gemäß der Figuren 1 bis 3 sind bereits oben beschrieben. Die bekannte elektronischen Nockenschalteinrichtung gemäß Fig. 3 ist als zentrale Anordnung anzusehen im Unterschied zur erfindungsgemäßen dezentralisierten elektronischen Nockenschalteinrichtung.

Fig. 4 zeigt beispielhaft eine erfindungsgemäße elektronische Nockenschalteinrichtung 40 mit einem Absolutwertdrehgeber 41 und mehreren Nockenschaltwerken 42.1 bis 42.x. Sowohl die Nockenschaltwerke untereinander, als auch der Drehgeber 41 mit dem ersten Nockenschaltwerk 42.1 sind jeweils mittels einem Echtzeit-Bussystem 43 verbunden. Die Genauigkeit der Schaltzeitpunkte ist von der Zeit in der die Geberinformation dem Nockenschaltwerk zur Verfügung steht, also vorwiegend von der Übertragungsdauer. Um auch bei schneller Rotation des Gebers eine hohe Schaltgenauigkeit zu gewährleisten wird ein Echtzeit-Ethernet-Bussystem bevorzugt. Besonders geeignet ist die in der Echtzeit-Ethernet-Variante "EtherCat" vorhandene Slave-to-Slave Kommunikation. Der daher im Ausführungsbeispiel benutzte Absolutwertdrehgeber 41 mit integriertem Echtzeit-Ethernet-Kommunikationsinterface gibt den jeweils aktuellen Positionswert auf das Echtzeit-Bussystem 43, hier also auf den EtherCat-Bus. Die am Bus 43 angeschlossenen dezentralen Nockenschaltwerke 42.1 bis 42.x lesen den Positionswert und schalten selbständig ihre Ausgänge gemäß den im Nockenschaltwerk hinterlegten Schaltzeitpunkten. Die Schaltzeitpunkte sind typisch in Winkelgraden definiert.

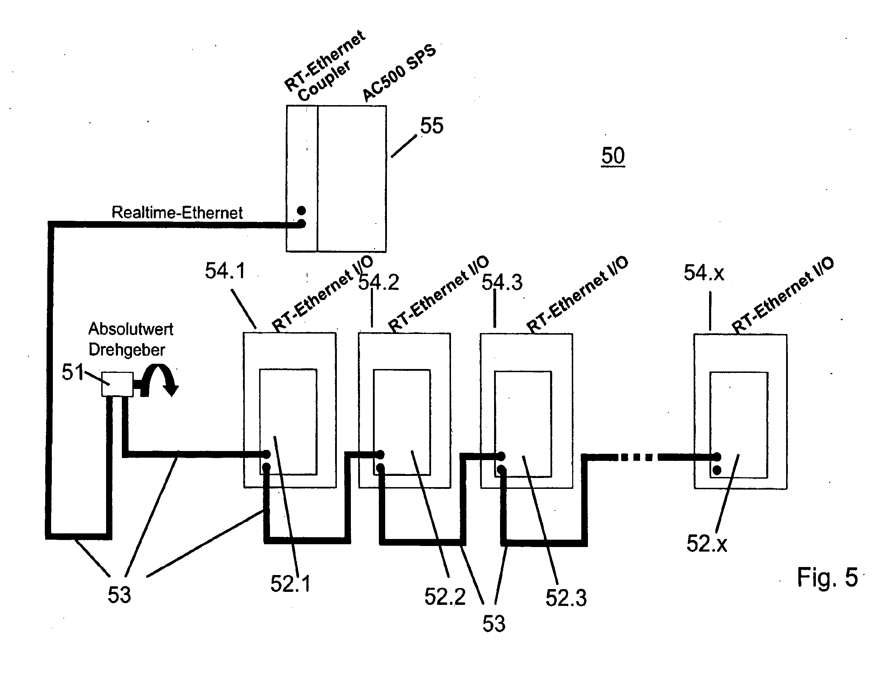

Fig. 5 zeigt ein Ausführungsbeispiel einer als dezentralisierte technische Anlage ausgeführte elektronische Nockenschalteinrichtung 50, die außer einem Absolutwertdrehgeber 51 mehrere Einausgabegeräte 54.1 bis 54.x mit integrierten Nockenschaltwerken 52.1 bis 52.x und eine speicherprogrammierte Steuerung 55 enthält. Alle diese Einrichtungskomponenten sind mit einem integrierten Echtzeit-Ethernet-Kommunikationsinterface ausgestattet und mittels eines Echtzeit-Bussystems 53 jeweils in Punkt-zu-Punkt-Verbindung miteinander verbunden. Die speicherprogrammierte Steuerung 55 ist dafür eingerichtet, eine zentrale Programmierung der Einausgabegeräte 54.1 bis 54.x, also beispielsweise der dort in den integrierten Nockenschaltwerken 52.1 bis 52.x gespeicherten Schaltzeitpunkte zu ermöglichen. Das Ausführungsbeispiel zeigt, dass auch komplexe Applikationsstrukturen der dezentralen elektronischen Nockenschalteinrichtung möglich sind.

## Patentansprüche

1. Elektronische Nockenschalteinrichtung (40, 50) mit einem Drehgeber (41, 51), mit einer speicherprogrammierten Steuerung (55), Einausgabegeräten (54.1 bis 54.x) und dezentralen elektronischen Nockenschaltwerken (42.1 bis 42.x, 52.1 bis 52.x), wobei zur Signalübertragung zwischen dem Drehgeber (41, 51) und den dezentralen elektronischen Nockenschaltwerken (42.1 bis 42.x, 52.1 bis 52.x) ein Echtzeit- Ethernet- Bussystem (43, 53) angeordnet ist, die elektronischen Nockenschaltwerke 42.1 bis 42.x, 52.1 bis 52.x) untereinander und der Drehgeber (51) mit der speicherprogrammierten Steuerung (55) mittels des Echtzeit-Ethernet-Bussystems (43, 53) verbunden sind und dazu im Drehzahlgeber (41, 51) ein Echtzeit- Ethernet-Kommunikationsinterface integriert ist, **dadurch gekennzeichnet, dass** die Nockenschaltwerke (42.1 bis 42.x, 52.1 bis 52.x) in den Einausgabegeräten (54.1 bis 54.x) integriert sind, und die speicherprogrammierte Steuerung (55) dafür eingerichtet ist, eine zentrale Programmierung der in den Einausgabegeräten (54.1 bis 54.x) in den integrierten Nockenschaltwerken 52.1 bis 52.x gespeicherten Schaltzeitpunkte zu ermöglichen.

2. Elektronische Nockenschalteinrichtung (40, 50) nach Anspruch 1, **dadurch gekennzeichnet, dass** das Echtzeit-Bussystem (43, 53) mittels einer Punkt-zu-Punkt-Verbindung zwischen dem Drehgeber (41, 51) und einem ersten Nockenschaltwerk (42.1, 52.1), sowie jeweils zwischen weiteren Nockenschaltwerken (42.2 bis 42.x, 52.2 bis 52.x) realisiert ist.

3. Elektronische Nockenschalteinrichtung (40, 50) nach Anspruch 1 oder 2, **dadurch gekennzeichnet, dass** der Drehgeber (41, 51) ein Absolutwertdrehgeber ist.

4. Elektronische Nockenschalteinrichtung (40, 50) nach Anspruch 3, **dadurch gekennzeichnet, dass** zur Realisierung des Echtzeit-Bussystems (43, 53) die in der Echtzeit-Ethernet-Variante EtherCat vorhandene Slave-to-Slave-Kommunikation verwendet ist.

## Claims

1. Electronic cam switching device (40, 50) having a rotary encoder (41, 51), having a programmable logic controller (55), input/output devices (54.1 to 54.x) and decentralized electronic cam switching mechanisms (42.1 to 42.x, 52.1 to 52.x), wherein a real-time Ethernet bus system (43, 53) is arranged for the purpose of transmitting signals between the rotary encoder (41, 51) and the decentralized electronic cam switching mechanisms (42.1 to 42.x, 52.1 to 52.x), the electronic cam switching mechanisms (42.1 to 42.x, 52.1 to 52.x) are connected to one another and the rotary encoder (51) is connected to the programmable logic controller (55) by means of the real-time Ethernet bus system (43, 53) and a real-time Ethernet communication interface is integrated in the speed encoder (41, 51) for this purpose, **characterized in that** the cam switching mechanisms (42.1 to 42.x, 52.1 to 52.x) are integrated in the input/output devices (54.1 to 54.x), and the programmable logic controller (55) is set up to make it possible to centrally program the switching times stored in the input/output devices (54.1 to 54.x) in the integrated cam switching mechanisms (52.1 to 52.x).

2. Electronic cam switching device (40, 50) according to Claim 1, **characterized in that** the real-time bus system (43, 53) is implemented by means of a point-to-point connection between the rotary encoder (41, 51) and a first cam switching mechanism (42.1, 52.1) and between further cam switching mechanisms (42.2 to 42.x, 52.2 to 52.x) in each case.

3. Electronic cam switching device (40, 50) according to Claim 1 or 2, **characterized in that** the rotary encoder (41, 51) is an absolute value rotary encoder.

4. Electronic cam switching device (40, 50) according to Claim 3, **characterized in that** the slave-to-slave communication present in the real-time Ethernet variant EtherCat is used to implement the real-time bus system (43, 53).

## Revendications

1. Dispositif électronique de commutation à cames (40, 50) comportant un codeur rotatif (41, 51) ayant une unité de commande programmée en mémoire (55), des dispositifs d'activation/désactivation (54.1 à 54.x) et des commutateurs électroniques à cames décentralisés décentralisés (42.1 à 42.x, 52.1 à 52.x), dans lequel un système de bus Ethernet temps réel (43, 53) est disposé à des fins de transmission de signal entre le codeur rotatif (41, 51) et les commutateurs électroniques à cames décentralisés (42.1 à 42.x, 52.1 à 52.x), les commutateurs électroniques à cames (42.1 à 42.x, 52.1 à 52.x) sont connectés les uns des autres et le codeur rotatif (51) est connecté à l'unité de commande programmée en mémoire (55) au moyen d'un système de bus Ethernet temps réel (43, 53) et une interface de communication Ethernet temps réel est intégrée à cet effet au codeur de vitesse (41, 51), **caractérisé en ce que** les commutateurs à cames (42.1 à 42.x, 52.1 à 52.x) sont intégrés aux dispositifs d'activation/désactivation (54.1 à 54.x) et l'unité de commande programmée en mémoire (55) est conçue pour permettre une programmation centralisée des appareils d'entrée/sortie (54.1 à 54.x) dans les commutateurs à cames intégrées (52.1 à 52.x) à des instants de commutation mémorisés.

2. Dispositif électronique de commutation à cames (40, 50) selon la revendication 1, **caractérisé en ce que** le système de bus temps réel (43, 53) est réalisé au moyen d'une connexion point à point entre le codeur rotatif (41, 51) et un premier commutateur à cames (42.1, 52.1), ainsi qu'entre d'autres commutateurs à cames respectifs (42.2 à 42.x, 52.2 à 52.x).

3. Dispositif électronique de commutation à cames (40, 50) selon la revendication 1 ou 2, **caractérisé en ce que** le codeur rotatif (41, 51) est un codeur rotatif absolu.

4. Dispositif électronique de commutation à cames (40, 50) selon la revendication 3, **caractérisé en ce que**, pour réaliser le système de bus temps réel (43, 53), on utilise la communication esclave-esclave présente dans la variante d'Ethernet temps réel EtherCat.
